# EUROPÄISCHE PATENTANMELDUNG

(11) **EP 4 826 676 A1**
(43) Veröffentlichungstag der Anmeldung: **21.10.2026**
(21) Anmeldenummer: 25170758.4
(22) Anmeldetag: 15.04.2025
(51) Int. Cl.: G06V 10/82, G06V 20/52

(54) **VORRICHTUNG UND VERFAHREN ZUM ERKENNEN MINDESTENS EINER PERSON IN BILDDATEN UND PERSONENZÄHLSYSTEM**

(71) Anmelder: SICK AG, 79183 Waldkirch (DE)
(72) Erfinder: Hammes, Markus, 79117 Freiburg (DE)
(74) Vertreter: Manitz Finsterwald Patent- und Rechtsanwaltspartnerschaft mbB

(57) **Zusammenfassung**

In einer Ausführungsform weist eine Vorrichtung zum Erkennen mindestens einer Person in Bilddaten einen ersten Dateneingang, eine erste Vorverarbeitungseinheit und eine Hauptverarbeitungseinheit auf. Der erste Dateneingang ist zum Zuführen einer ersten Abfolge von Einzelbildern geeignet. Die erste Vorverarbeitungseinheit ist dazu eingerichtet, jeweils ein erstes Bewegungsspurenbild aus einer ersten einstellbaren Anzahl an aufeinanderfolgenden Einzelbildern der ersten Abfolge zu erzeugen. Die Hauptverarbeitungseinheit ist dazu eingerichtet, das erste Bewegungsspurenbild auszuwerten und daraus ein Ausgangssignal bereitzustellen. Das Ausgangssignal gibt zumindest in dem ersten Bewegungsspurenbild während der Auswertung erkannte Personen und/oder deren Anzahl an.

## Beschreibung

Die vorliegende Erfindung betrifft eine Vorrichtung zum Erkennen mindestens einer Person in Bilddaten, ein Personenzählsystem und ein Verfahren zum Erkennen mindestens einer Person in Bilddaten.

Durch die Automatisierung von Fabriken entstehen in diesen für Menschen sichere Bereiche, die frei von gefährlichen Maschinen oder Automaten sind, und für Personen nicht sichere Bereiche, in denen gefährliche Maschinen oder selbstfahrende, automatisch gesteuerte Fahrzeuge präsent sind, vor denen Menschen besonders geschützt werden müssen. In einem derartigen Umfeld kann es wünschenswert sein, eine Anzahl von Personen, die sich in einem gefährlichen Bereich aufhält, zu erfassen.

Diese Funktion macht die sichere Unterscheidung von Personen und anderen Objekten erforderlich. Die Klassifizierung von Objekten in Bildern wird gewöhnlich auf Basis von Einzelbildern mit Hilfe künstlicher Intelligenz gestützter, Kl-gestützter, Bildklassifikation umgesetzt. In dynamischen Szenarien kommen auch Bildserien als Eingangsdaten zum Einsatz, weil darin gleichzeitig eine Objektverfolgung (Tracking) ausgeführt werden kann. Beispielsweise sucht eine KI in Form eines neuronalen Netzes in Einzelbildern nach relevanten Objekten, klassifiziert diese und gibt die jeweilige Position und eine zugehörige sogenannte Bounding Box, d.h. einen Begrenzungsrahmen, welcher das erkannte Objekt bzw. die erkannte Person umschließt, aus. Alternativ werden andere Kennzeichnungen, wie zum Beispiel die Segmentierung der zu einem Objekt oder einer Person gehörenden Pixelbereiche, vorgenommen. In einem klassischen Nachverarbeitungsschritt werden diese Ausgangsdaten aufeinander folgender Bilddatensätze korreliert. Die Korrelation wird dadurch erreicht, dass die Detektionen einzelner Bilder zu einem zeitlichen Bewegungsverlauf ("Track") zusammengeführt werden und dass Konsistenzprüfungen der Bildserie erfolgen. Solche Konsistenzprüfungen betreffen zum Beispiel die Stabilität der Klassifikationen.

Der bekannte Ansatz, relevante Informationen aus Einzelbildern zu extrahieren und anschließend lediglich die abstrahierten bzw. verdichteten Objektinformationen in einen zeitlichen Zusammenhang zu stellen, führt jedoch zwangsläufig zu einem gewissen Informationsverlust. Relevante Unterscheidungsmerkmale von Personen und anderen Objekten gehen dadurch verloren.

Ein weiterer Nachteil des bekannten Ansatzes besteht darin, dass insbesondere zweidimensionale, 2D-, Bilder, eingesetzt werden, welche jedoch personenbezogene Daten enthalten können und nicht sinnvoll anonymisiert werden können, ohne relevante Merkmale zu entfernen oder falsche Merkmale einzuführen. Daher sind die Erfassung, Speicherung und Verwendung dieser Daten im europäischen Wirtschaftsraum problematisch.

Eine Aufgabe der vorliegenden Erfindung besteht folglich darin, eine Vorrichtung zum Erkennen mindestens einer Person in Bilddaten und ein zugehöriges Verfahren anzugeben, welche eine Verbesserung gegenüber dem Stand der Technik erzielt. Insbesondere soll die Erkennung die Anforderungen der funktionalen Sicherheit erfüllen.

Diese Aufgabe wird gelöst durch die Gegenstände der unabhängigen Patentansprüche. Weiterbildungen und Ausgestaltungen sind Gegenstände der abhängigen Ansprüche.

In einer ersten Ausführungsform weist eine Vorrichtung zum Erkennen mindestens einer Person in Bilddaten einen ersten Dateneingang, eine erste Vorverarbeitungseinheit und eine Hauptverarbeitungseinheit auf. Der erste Dateneingang ist zum Zuführen einer ersten Abfolge von Einzelbildern geeignet. Die erste Vorverarbeitungseinheit ist dazu eingerichtet, jeweils ein erstes Bewegungsspurenbild aus einer ersten einstellbaren Anzahl an aufeinanderfolgenden Einzelbildern der ersten Abfolge zu erzeugen. Die Hauptverarbeitungseinheit ist dazu eingerichtet, das erste Bewegungsspurenbild auszuwerten und daraus ein Ausgangssignal bereitzustellen. Das Ausgangssignal gibt zumindest in dem ersten Bewegungsspurenbild während der Auswertung erkannte Personen und/oder deren Anzahl an.

In der erfindungsgemäßen Vorrichtung wird die erste Abfolge von Einzelbildern in der ersten Vorverarbeitungseinheit für die Auswertung in der nachgeschalteten Hauptverarbeitungseinheit so vorbereitet, dass mehrere aufeinanderfolgende Einzelbilder zu dem ersten Bewegungsspurenbild zusammengefügt werden. Dieser zusätzliche Verarbeitungsschritt ermöglicht es, dass Unterscheidungsmerkmale zwischen Objekten und Personen beispielsweise deutlicher hervortreten, so dass in der Auswertung eine sichere Unterscheidung zwischen Personen und Objekten gewährleistet ist.

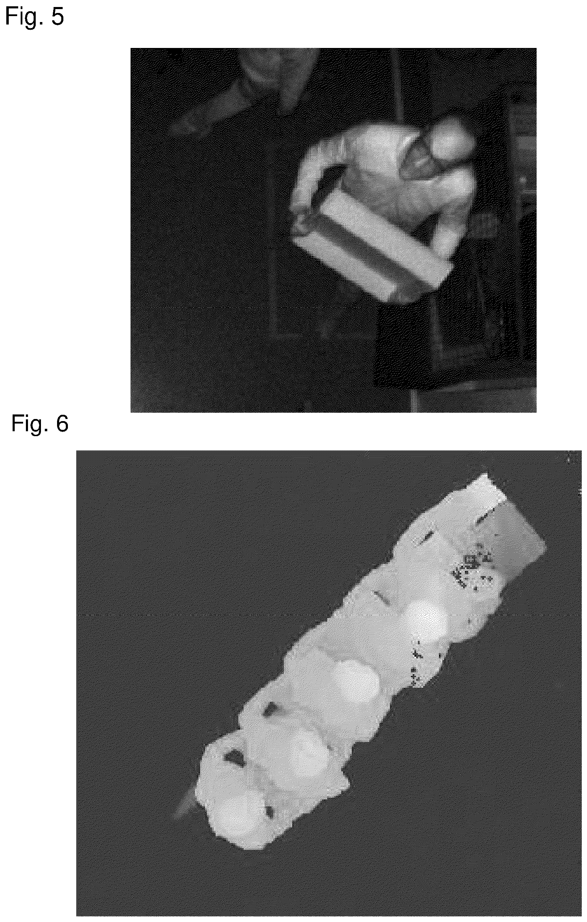

Die Abfolge von Einzelbildern wird beispielsweise durch eine geeignete digitale Kamera in bekannter Art und Weise erzeugt. Bei einem Einzelbild handelt es sich beispielsweise um ein zweidimensionales Einzelbild, insbesondere ein Grauwertbild oder ein Farbbild. Alternativ kann das Einzelbild ein dreidimensionales Einzelbild sein, welches in seiner dritten Dimension eine Entfernungsinformation zu dem jeweiligen Bildpunkt enthält. Dementsprechend kann es sich bei der Kamera um eine Tiefenkamera, z.B. eine LiDAR-Kamera, handeln, welche beispielsweise über Lichtlaufzeitmessung die Tiefeninformationen erzeugt. Diese Entfernungsinformation kann farblich kodiert dargestellt sein. Ein derartiges Einzelbild kann als Tiefenkarte bezeichnet werden. Ein beispielhaftes Einzelbild, welches in einer Ausführungsform der erfindungsgemäßen Vorrichtung zum Einsatz kommen kann, ist in Fig. 5 dargestellt. Hier handelt es sich um ein Grauwertbild einer Szene.

Ein Bewegungsspurenbild geht erfindungsgemäß aus einer zeitlichen Abfolge, also mehreren hintereinander von einer Kamera aufgenommenen und dem ersten Dateneingang der Vorrichtung zugeführten Einzelbildern, hervor. Dadurch, dass die Informationen mehrerer Einzelbilder in einem einzigen Bewegungsspurenbild für die jeweilige Abfolge zusammengefasst und dargestellt sind, wird beispielsweise eine Bewegung eines Objekts, welche innerhalb der für das Bewegungsspurenbild verwendeten Sequenz von Einzelbildern erfolgte, in dem einen Bewegungsspurenbild sichtbar und damit für die automatisierte Bildanalyse in der Hauptverarbeitungseinheit entsprechend erkennbar gemacht. Bei der Auswertung ist es der Hauptverarbeitungseinheit demzufolge möglich, sicher zu unterscheiden, ob das Bewegungsspurenbild eine Person enthält oder nicht, und gegebenenfalls die Anzahl von Personen in dem Bewegungsspurenbild zu ermitteln. Sofern das Bewegungsspurenbild lediglich Objekte oder bewegte Objekte enthält, ist diese Anzahl Null.

Mit dem Ausgangssignal wird beispielsweise eine jeweilige Position einer erkannten Person oder/und deren Bounding Box angegeben. Ein mit dem Ausgangssignal angegebener Wert, welcher die erkannte Personen bzw. Personen repräsentiert, kann auch anders ausgestaltet sein, beispielsweise als aus dem Bewegungsspurenbild ermittelte Trajektorie, solange gewährleistet ist, dass dadurch ein Rückschluss auf eine Person und gegebenenfalls eine anschließende oder nachgelagerte Zählung zur Ermittlung der Anzahl möglich ist.

Die Anzahl der Einzelbilder, welche in der Vorverarbeitungseinheit zu dem Bewegungsspurenbild kombiniert werden, ist je nach Applikation einstellbar. Mit einer geringen Anzahl von Einzelbildern sind Bewegungsmerkmale möglicherweise nicht so stark ausgeprägt, andererseits bleibt die Latenz, d.h. der zeitliche Versatz zwischen der Aufnahme des ersten Einzelbildes bzw. dessen Zuführen zu der erfindungsgemäßen Vorrichtung und dem Vorliegen des Ausgangssignals, kurz. In Anwendungen, in denen die Latenz keine wichtige Rolle spielt, können mehr Einzelbilder zur Erzeugung des Bewegungsspurenbildes eingesetzt werden. Somit werden unter Umständen lange Bewegungsspuren in dem Bewegungsspurenbild sichtbar, wodurch Merkmale und Unterschiede von Personen im Vergleich zu anderen Objekten in dem Bewegungsspurenbild noch deutlicher werden und in der Hauptverarbeitungseinheit noch leichter erkannt werden.

In einer Ausführungsform umfasst die Hauptverarbeitungseinheit ein künstliches neuronales Netz, insbesondere ein klassifizierendes neuronales Netz.

Das neuronale Netz ist beispielsweise als sogenanntes Convolutional Neural Network, CNN, also konvolutionales neuronales Netz, auch als Faltungsnetzwerk bezeichnet, implementiert. Das neuronale Netz kann auch als KI-System bezeichnet werden. In einer beispielhaften Implementierung kann ein YOLO-, You Only Look Once, Netz verwendet bzw. wiederverwendet werden, welches bekanntermaßen mehrere Faltungsschichten aufweist. Bei dieser Realisierung wird beispielsweise einer der bei einem YOLO-Netz üblichen Eingangskanäle für RGB-Bilddaten zum Zuführen des Bewegungsspurenbildes verwendet. Weiterhin ist es möglich, einem zweiten Eingangskanal des YOLO-Netzes zugleich eine von der Kamera erzeugte Tiefenkarte (d.h. ein Tiefenbild) und/oder einem dritten Eingangskanal ein Graustufen oder Schwarzweißbild zuzuführen, wobei das Graustufen oder Schwarzweißbild insbesondere zu dem Tiefenbild korrespondiert, aber keine Tiefeninformation enthält und stattdessen z.B. Intensitätswerte umfasst. Auf diese Weise können die drei Eingangskanäle, die üblicherweise für die drei Farbanteile (rot, grün, blau) genutzt werden, (wieder-)verwendet werden.

Gemäß einer Weiterbildung wurde das neuronale Netz in einer Trainingsphase unter Verwendung einer Vielzahl annotierter erster Trainingsbewegungsspurenbilder trainiert.

In der Trainingsphase, wird das neuronale Netz beispielsweise vorab, also vor seinem tatsächlichen Einsatz im laufenden Betrieb, mit synthetischen oder realen Trainingsdaten trainiert. Erfindungsgemäß werden als Trainingsdaten jeweils Bewegungsspurenbilder, welche annotiert bzw. gelabelt sind und jeweils Personen oder Objekte zeigen, und als Trainingsbewegungsspurenbilder bezeichnet werden, verwendet. Damit wird das neuronale Netz ertüchtigt, als funktionales Element der Hauptverarbeitungseinheit eine klassifizierende Personen- und Objekterkennung durchzuführen. Bei einer beispielhaften Implementierung, die auf einem YOLO-Netz basiert, kann ein vortrainiertes YOLO-Netz verwendet werden, welches in der erfindungsgemäßen Trainingsphase mit den Trainingsbewegungsspurenbildern weiter trainiert wird. Insbesondere sind bei einem vortrainierten YOLO-Netz die vorderen Layer, die näher an den Eingangsneuronen liegen, bereits für elementare Bilddaten gut trainiert. In der hier spezifizierten Trainingsphase werden dann im Wesentlichen die hinteren Layer, die näher an den Ausgangsneuronen liegen, durch das Training angepasst.

In einer zweiten Ausführungsform weist die Vorrichtung zusätzlich einen zweiten Dateneingang zum Zuführen einer zweiten Abfolge von Einzelbildern sowie eine zweite Vorverarbeitungseinheit auf. Die zweite Vorverarbeitungseinheit ist dazu eingerichtet, jeweils ein zweites Bewegungsspurenbild aus einer zweiten einstellbaren Anzahl an aufeinanderfolgenden Einzelbildern der zweiten Abfolge zu erzeugen. Die Hauptverarbeitungseinheit ist weiter dazu eingerichtet, das erste und das zweite Bewegungsspurenbild auszuwerten und daraus das Ausgangssignal bereitzustellen.

Dementsprechend werden in einem Vorverarbeitungsabschnitt der erfindungsgemäßen Vorrichtung, also in der ersten und zweiten Vorverarbeitungseinheit, zeitlich parallel zwei Bewegungsspurenbilder aus der ersten und der zweiten Abfolge von Einzelbildern erstellt. Dabei beziehen sich die zweite Abfolge und die erste Abfolge auf dieselbe Szene, unterscheiden sich jedoch in gewisser Hinsicht, wie im Folgenden näher erläutert wird. Die so erzeugten Bewegungsspurenbilder werden beide in der Hauptverarbeitungseinheit ausgewertet. Die Güte der in der Hauptverarbeitungseinheit vorgenommenen Klassifizierung wird damit noch weiter erhöht. Beispielsweise wird die Klassifikation stabiler, bzw. die Robustheit der Entscheidungen der Hauptverarbeitungseinheit wird verbessert.

Eine erste bzw. zweite Abfolge von aufeinanderfolgenden Einzelbildern bezieht sich dabei lediglich vorzugsweise auf direkt aufeinanderfolgende Einzelbilder. Alternativ kann jeder zweite oder jeder dritte Frame oder Frames in einem unregelmäßigen Abstand aus einer Einzelbilderfolge als Abfolge von Einzelbildern dem ersten bzw. zweiten Dateneingang zugeführt werden.

In einer beispielhaften Implementierung ist die zweite einstellbare Anzahl an aufeinanderfolgenden Einzelbildern an die erste einstellbare Anzahl an aufeinanderfolgenden Einzelbildern angepasst. Zudem kann ein Startzeitpunkt der zweiten Abfolge von Einzelbildern an einen Startzeitpunkt der ersten Abfolge von Einzelbildern angepasst sein. Beispielsweise wird dieselbe Szene zweimal nahezu gleichzeitig auf unterschiedliche Art und Weise, beispielsweise mit zwei unterschiedlichen Bildsensoren oder Kameras, aufgezeichnet. Die dabei jeweils entstandenen Bildserien, hier bezeichnet als erste und zweite Abfolge von Einzelbildern, werden der erfindungsgemäßen Vorrichtung über den ersten bzw. zweiten Dateneingang zugeführt. Bevorzugt basiert somit das erste und das zweite Bewegungsspurenbild auf in etwa der gleichen Anzahl von Einzelbildern, welche in etwa zur gleichen Zeit aufgenommen wurden.

Gemäß einer Weiterbildung umfasst die erste Abfolge von Einzelbildern zweidimensionale Einzelbilder, insbesondere Grauwertbilder. Die zweite Abfolge von Einzelbildern umfasst dreidimensionale Einzelbilder, insbesondere Tiefenkarten.

In der oben beschriebenen zweiten Ausführungsform unterscheiden sich demgemäß die Bewegungsspurenbilder dadurch, dass das erste Bewegungsspurenbild auf Basis von zweidimensionalen Einzelbildern, beispielsweise Grauwertbildern, in der ersten Vorverarbeitungseinheit erzeugt wurde, während das zweite Bewegungsspurenbild in der zweiten Vorverarbeitungseinheit unter Verwendung dreidimensionaler Einzelbilder, insbesondere Tiefenkarten, erzeugt wird. Sowohl der ersten Abfolge als auch der zweiten Abfolge von Einzelbildern liegt dabei dieselbe Szene, für die die Personenerkennung bzw. -zählung durchgeführt wird, zugrunde.

In einer Weiterbildung der zweiten Ausführungsform umfasst die Hauptverarbeitungseinheit ein künstliches neuronales Netz, insbesondere ein klassifizierendes neuronales Netz.

Für die Auswertung des ersten und des zweiten Bewegungsspurenbildes kann das klassifizierende neuronale Netz verwendet werden. Ähnlich zur obigen Beschreibung kann das neuronale Netz beispielsweise als CNN implementiert sein. Ein YOLO-Netz kann hierfür die Basis bilden.

Gemäß einer Weiterbildung der zweiten Ausführungsform wurde das neuronale Netz in einer Trainingsphase unter Verwendung einer Vielzahl annotierter erster Trainingsbewegungsspurenbilder und einer Vielzahl annotierter zweiter Trainingsbewegungsspurenbilder trainiert.

Für die Auswertung des ersten und des zweiten Bewegungsspurenbildes kann das klassifizierende neuronale Netz verwendet werden, welches vorab unter Einsatz geeigneter erster und zweiter gelabelter Trainingsbewegungsspurenbilder trainiert wurde. Dieses neuronale Netz klassifiziert dann im anschließenden Regelbetrieb der Vorrichtung Objekte anhand während der Trainingsphase von dem Netz gefundener oder erarbeiteter Merkmale und ist damit in der Lage, Personen von anderen Objekten zu unterscheiden. Die so in den Bewegungsspurenbildern ermittelten Personen beziehungsweise deren Anzahl wird mit dem Ausgangssignal bereitgestellt.

Gemäß einer Weiterbildung ist das erste bzw. das zweite Bewegungsspurenbild eine Überlagerung der Einzelbilder aus der einstellbaren Anzahl an aufeinanderfolgenden Einzelbildern der ersten bzw. zweiten Abfolge von Einzelbildern.

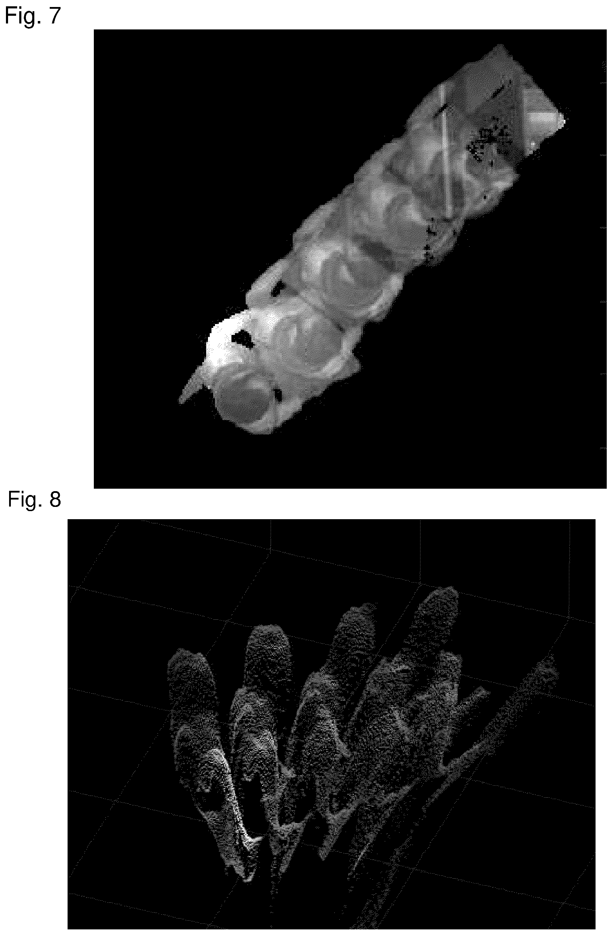

Das erste Bewegungsspurenbild ist eine Überlagerung oder Akkumulation oder Aggregation der Einzelbilder aus der einstellbaren Anzahl an aufeinanderfolgenden Einzelbildern der ersten Abfolge. Das zweite Bewegungsspurenbild ist eine Überlagerung der Einzelbilder aus der einstellbaren Anzahl an aufeinanderfolgenden Einzelbildern der zweiten Abfolge. Werden in einer beispielhaften Realisierung, wie der zweiten beschriebenen Ausführungsform, zwei Abfolgen von Einzelbildern verwendet, so ist beispielsweise das erste Bewegungsspurenbild ein zweidimensionales Grauwertbild, während das zweite Bewegungsspurenbild ein dreidimensionales Bild oder eine Tiefenkarte ist. Ein Beispiel eines zweidimensionalen Bewegungsspurenbildes ist in Fig. 6 gezeigt, während Fig. 7 ein beispielhaftes 3D-Bewegungsspurenbild zeigt. Beide Bilder sind in dem Beispiel jeweils aus fünf aufeinanderfolgenden Einzelbildern berechnet worden. Den gezeigten Bewegungsspurenbildern liegen jeweils beispielhafte Abfolgen von Einzelbildern zugrunde, welche in diesem Beispiel mit einer reduzierten Bildwiederholrate, die unterhalb von 30 Bildern pro Sekunde, fps, aufgenommen wurden. Dadurch wirken die jeweiligen Bewegungsspuren etwas stückhafter als sie bei einer gängigen Bildwiederholrate von in etwa 30 fps wären. Fig. 6 und Fig. 7 zeigen jeweils eine Person in der Draufsicht, die sich, einen Gegenstand haltend, jeweils von links unten nach rechts oben bewegt hat.

In einer Weiterbildung ist das erste bzw. das zweite Bewegungsspurenbild durch pixelweises Aufsummieren und/oder pixelweise Maximalwertbildung und/oder pixelweise Mittelung aus den Einzelbildern der einstellbaren Anzahl an aufeinanderfolgenden Einzelbildern der ersten bzw. zweiten Abfolge gebildet.

Jedes Bewegungsspurenbild wird durch eine oder mehrere der beschriebenen Maßnahmen aus den Einzelbildern der einstellbaren Anzahl an aufeinanderfolgenden Einzelbildern der jeweiligen Abfolge erzeugt. So werden beispielsweise Bildmerkmale verschiedener Einzelbilder der Bildfolge in ein gemeinsames Bild, nämlich das Bewegungsspurenbild, übertragen. Optional kann anfänglich in jedem Einzelbild eine Hintergrundentfernung stattfinden. Anschließend kann in dieser Option ein sogenanntes Frame Differencing angewendet werden, bei dem aufeinanderfolgende Einzelbilder subtrahiert werden, um auf diese Weise sich bewegende Objekte hervorzuheben.

Durch die Verwendung der Bewegungsspurenbilder als Eingangsdaten für die Hauptverarbeitungseinheit können zeitliche Zusammenhänge, die sonst nur in einer Abfolge von mehreren Einzelbildern erkennbar sind, in einem einzigen Bild, nämlich dem Bewegungsspurenbild, untersucht werden. Ein Bewegungsspurenbild lässt sich vorteilhafterweise auch zur Anonymisierung von Grauwertbildern nutzen, da dadurch die feineren Merkmale einer Person, die diese identifizieren könnten, sozusagen verwaschen werden. Dabei bleiben jedoch die relevanten Bewegungs- und Formmerkmale von Personen erhalten.

Ein weiterer Vorteil der Verwendung eines Bewegungsspurenbildes ist die diesem innewohnende Verfremdung personenbezogener Merkmale, die in den Einzelbildern der jeweiligen Abfolge noch sichtbar sind, wie aus Fig. 5 zu erkennen ist. Im Bewegungsspurenbild sind diese optischen Merkmale, wie in den Figuren 6 und 7 leicht zu erkennen ist, anonymisiert. Dabei hängt der Grad der Anonymisierung unter anderem von der Anzahl der für das Bewegungsspurenbild verwendeten Einzelbilder ab. Aufgrund dieser Anonymisierung entspricht die erfindungsgemäße Klassifizierung und Erkennung von Personen im Bewegungsspurenbild auch den im europäischen Raum etablierten strengen Vorschriften des Datenschutzes bezüglich Speicherung und Verwendung der Daten.

Gemäß einer dritten Ausführungsform ist die Hauptverarbeitungseinheit weiter dazu eingerichtet, zusätzlich zu dem ersten Bewegungsspurenbild mindestens ein Einzelbild aus der ersten Abfolge von Einzelbildern auszuwerten und daraus das Ausgangssignal bereitzustellen. Dabei umfasst die erste Abfolge von Einzelbilden dreidimensionale Einzelbilder, insbesondere Tiefenkarten.

In dieser Ausführungsform wird zusätzlich zu dem Bewegungsspurenbild mindestens ein Einzelbild aus der Abfolge, die dem Bewegungsspurenbild zugrunde liegt, als Eingangsinformation für die Hauptverarbeitungseinheit verwendet. Damit wird erreicht, dass die zusätzlichen optischen Merkmale und die Anonymisierung in dem Bewegungsspurenbild kombiniert werden mit der geringeren Latenz des Einzelbildes und der in diesem meist leichteren Vereinzelbarkeit von Objekten. Aufgrund der besseren Anonymisierung in 3D-Daten wird für das zusätzlich auszuwertende Einzelbild in dieser Ausführungsform bevorzugt nicht ein 2D- oder Grauwertbild, sondern ein Tiefenkartenbild verwendet.

In einer Weiterbildung der zweiten Ausführungsform ist die Hauptverarbeitungseinheit dazu eingerichtet, zusätzlich zu dem ersten und dem zweiten Bewegungsspurenbild mindestens ein Einzelbild aus der ersten oder zweiten Abfolge von Einzelbildern auszuwerten und daraus das Ausgangssignal bereitzustellen.

In dieser Ausführungsform verwendet die Hauptverarbeitungseinheit das erste und das zweite Bewegungsspurenbild sowie ein oder mehrere Einzelbilder, die jeweils aus der ersten oder zweiten Abfolge stammen. Dabei werden - gemäß der obigen Ausführungen - bevorzugt dreidimensionale Einzelbilder eingesetzt. Somit werden implizit bzw. automatisch Vorgaben bezüglich Anonymisierung aus entsprechenden Datenschutzverordnungen umgesetzt. Zudem kann die Erkennung von Personen auf diese Art und Weise noch weiter verbessert werden.

In einer Weiterbildung der ersten Ausführungsform umfasst die Hauptverarbeitungseinheit ein weiteres künstliches neuronales Netz, insbesondere ein weiteres klassifizierendes neuronales Netz, und eine Ausgabeeinheit. Das weitere neuronale Netz wurde in einer Trainingsphase unter Verwendung einer Vielzahl annotierter erster Trainingseinzelbilder darauf trainiert, mindestens ein Einzelbild aus der ersten Abfolge von Einzelbildern auszuwerten. Die Ausgabeeinheit ist dazu eingerichtet, das Ausgangssignal in Abhängigkeit eines Auswerteergebnisses des neuronalen Netzes und eines Auswerteergebnisses des weiteren neuronalen Netzes bereitzustellen. Alternativ wurde das neuronale Netz der Hauptverarbeitungseinheit während der Trainingsphase unter zusätzlicher Verwendung einer Vielzahl annotierter erster Trainingseinzelbilder darauf trainiert, zusätzlich zu dem ersten Bewegungsspurenbild mindestens ein Einzelbild aus der ersten Abfolge von Einzelbildern auszuwerten.

Die Realisierung der Hauptverarbeitungseinheit unter Verwendung von Methoden der künstlichen Intelligenz kann demzufolge so ausgestaltet sein, dass genau ein neuronales Netz verwendet wird, um das erste Bewegungsspurenbild und ein oder mehrere Einzelbilder auszuwerten. Das neuronale Netz wird in fachüblicher Art und Weise dementsprechend mit gelabelten ersten Trainingsbewegungsspurenbildern und gelabelten ersten Trainingseinzelbildern trainiert. In einer alternativen Realisierung wird zur parallelen Auswertung eines oder mehrerer Einzelbilder im Sinne einer Konzeptdiversität der Detektion ein separates neuronales Netz, hier bezeichnet als weiteres neuronales Netz, vorgesehen. Damit umfasst in dieser Realisierungsform die Hauptverarbeitungseinheit zwei künstliche neuronale Netze. Die Ausgabeeinheit erzeugt aus dem im jeweiligen Ausgabeneuron des jeweiligen neuronalen Netzes bereitgestellten Auswerteergebnis durch geeignete Kombination, beispielsweise logische ODER-Verknüpfung oder logische UND-Verknüpfung, das Ausgangssignal. Die Ausgabeeinheit kann optional zusätzlich eine Güte des jeweiligen Auswerteergebnisses berücksichtigen.

Die Verwendung eines Einzelbildes in der Auswertung zusätzlich zu einem Bewegungsspurenbild erreicht mit Vorteil eine Redundanz, welche speziell im Hinblick auf die Zuverlässigkeit der Personenerkennung in sicherheitsrelevanten Anwendungen von Vorteil ist. Der Ansatz, bei dem zwei separate neuronale Netzwerke zum Einsatz kommen, ermöglicht zusätzlich zur Redundanz die besagte Diversität der Konzepte. Das weitere neuronale Netz wird dann entsprechend nur mit gelabelten Trainingseinzelbildern vorab trainiert. Eine Diversität wird dabei sowohl durch die unterschiedlichen Bildmerkmale in den Einzelbildern bzw. Bewegungsspurenbildern als auch durch die unterschiedlichen Trainingsprozesse und möglicherweise unterschiedlichen Architekturen des jeweils eingesetzten neuronalen Netzes erreicht.

In einer Weiterbildung der zweiten Ausführungsform umfasst die Hauptverarbeitungseinheit ein weiteres künstliches neuronales Netz, insbesondere ein weiteres klassifizierendes neuronales Netz, und eine Ausgabeeinheit. Das weitere neuronale Netz wurde in einer Trainingsphase unter Verwendung einer Vielzahl annotierter erster Trainingseinzelbilder und/oder einer Vielzahl annotierter zweiter Trainingseinzelbilder darauf trainiert, mindestens ein Einzelbild aus der ersten Abfolge von Einzelbildern und/oder mindestens ein Einzelbild aus der zweiten Abfolge von Einzelbildern auszuwerten. Die Ausgabeeinheit ist dazu eingerichtet, das Ausgangssignal in Abhängigkeit eines Auswerteergebnisses des neuronalen Netzes und eines Auswerteergebnisses des weiteren neuronalen Netzes bereitzustellen. Alternativ wurde das neuronale Netz der Hauptverarbeitungseinheit in einer Trainingsphase unter zusätzlicher Verwendung einer Vielzahl annotierter erster Trainingseinzelbilder und/oder einer Vielzahl annotierter zweiter Trainingseinzelbilder darauf trainiert, zusätzlich zu dem ersten und dem zweiten Bewegungsspurenbild ein oder mehrere Einzelbilder aus der ersten Abfolge von Einzelbildern und/oder ein oder mehrere Einzelbilder aus der zweiten Abfolge von Bewegungsspurenbildern auszuwerten.

Auch die Auswertung zweier Bewegungsspurenbilder, die als Grauwertbild und Tiefenkartenbild vorliegen, kann ergänzt werden durch die Auswertung eines oder mehrerer Einzelbilder, wobei technisch die Möglichkeit besteht, hierfür Grauwertbilder oder Tiefenkartenbilder zu verwenden. Zur Einhaltung der im europäischen Raum gegebenen Datenschutzrichtlinien werden bevorzugt Tiefenkartenbilder als Einzelbilder verwendet. In der Implementierung gibt es einerseits die Möglichkeit, ein einziges neuronales Netz unter Einsatz von gelabelten ersten Trainingsbewegungsspurenbildern, gelabelten zweiten Trainingsbewegungsspurenbildern und gelabelten ersten und/oder zweiten Trainingseinzelbildern vorab zu trainieren. In einer zweiten Implementierungsmöglichkeit werden, wieder im Sinne der Konzeptdiversität, zwei unterschiedliche neuronale Netze vorgesehen, wobei das eine mit dem ersten und dem zweiten gelabelten Bewegungsspurenbild trainiert wird, und das andere auf Personenerkennung mit gelabelten Einzelbildern, vorzugsweise Tiefenkartenbildern.

In einer Weiterbildung weisen die in der jeweiligen Trainingsphase eingesetzten ersten und/oder zweiten annotierten Trainingsbewegungsspurenbilder verschiedene Klassen von Objekten auf und sind gemäß dieser Klassen annotiert.

Durch das Annotieren bzw. das Labelling wird eine Zuordnung zu einer richtigen bzw. korrekten Ausgangsklasse vorgenommen.

Insbesondere umfassen die verschiedenen Klassen zumindest eine Menschenklasse, eine Fahrzeugklasse und eine humanoide Roboterklasse.

Dabei kann die Fahrzeugklasse beispielsweise autonome Fahrzeuge, wie Automated Guided Vehicles, AGVs, oder Maschinen umfassen.

Insbesondere erfolgt die jeweilige Trainingsphase gemäß eines überwachten Lernens. Dieses wird auch als supervised learning bezeichnet.

Vorzugsweise werden die Trainingsdaten, also die Trainingsbewegungsspurenbilder und/oder die Trainingseinzelbilder für die jeweilige zu realisierende Applikation ausgelegt.

In einer Weiterbildung umfasst ein Trainingsbewegungsspurenbild der Menschenklasse mindestens ein für eine Person charakteristisches Bewegungsmerkmal, beispielsweise eine zeitliche Pendel- und/oder Wippbewegung einer in Fortbewegung befindlichen Person, eine Bewegung mindestens einer Extremität einer in Fortbewegung befindlichen Person, eine plastische Verformung des Körpers einer in Fortbewegung befindlichen Person.

Ein Bewegungsmerkmal ist beispielsweise ein geometrisches Bewegungsmuster. Bekanntermaßen unterscheidet sich eine durch eine Person ausgeführte Bewegung, insbesondere Fortbewegung, von einer Bewegung eines humanoiden Roboters durch beispielsweise eine größere Unregelmäßigkeit. Durch den Einsatz einer Vielzahl unterschiedlicher Trainingsbewegungsspurenbilder wird die Varianz der darin jeweils enthaltenen Bewegungsmuster innerhalb einer Klasse, aber auch über unterschiedliche Klassen, erhöht und damit die Erkennung von Personen noch weiter verbessert.

Durch die erfindungsgemäße Trainingsphase und unter Einsatz der beschriebenen Trainingsdaten, wird die Hauptverarbeitungseinheit, insbesondere das die hier jeweils eingesetztes neuronales Netz oder die Netze, ertüchtigt, in den Bewegungsspurenbildern enthaltene Personen zu erkennen. Zusätzlich kann auch eine Bewegungsrichtung, die beispielsweise einen Verlauf der Bewegung oder Trajektorie erfasst, ausgewertet werden. Dies ist besonders von Vorteil, wenn die erfindungsgemäße Vorrichtung zur Zählung von Personen, die zwischen zwei unterschiedlichen räumlichen Bereichen wechseln, eingesetzt wird.

In einer Ausführungsform umfasst ein Personenzählsystem die erfindungsgemäße Vorrichtung zum Erkennen mindestens einer Person in Bilddaten gemäß einer der oben beschriebenen Ausführungsformen, sowie eine Kamera zur Erzeugung der Einzelbilder. Ein Datenausgang der Kamera ist mit dem Dateneingang der Vorrichtung verbunden. Das Personenzählsystem ist dazu eingerichtet, in Abhängigkeit des Ausgangssignals der Vorrichtung eine Anzahl von Passagen von Personen über eine Grenze funktional sicher zu erfassen.

Beispielsweise wird das Personenzählsystem bei einem Durchgangszähler eingesetzt, um die Anzahl von Personen, die den Durchgang insbesondere in die jeweilige Richtung passiert haben, zu erfassen. Somit kann ein derartiger Durchgangszähler am Übergang zwischen einem sicheren Bereich und einem Gefahrenbereich in einer Fabrik verwendet werden, um eine Anzahl von Personen im Gefahrenbereich funktional sicher zu bestimmen. Gemäß geltender Sicherheitsnormen, beispielsweise IEC61508 oder ISO13849 muss der Durchgangszähler sicher ausgeführt sein, damit der von ihm ermittelte Zählerstand in sicherheitsrelevanter Art und Weise für die Risikominimierung eingesetzt werden kann.

Funktionale Sicherheit bezeichnet den Teil der Sicherheit eines Systems, der von der korrekten Funktion des sicherheitsbezogenen Systems und anderer risikominimierender Maßnahmen abhängt. Herausforderungen bekannter Zählsysteme liegen in der Unterscheidung zwischen Personen und anderen Objekten, beispielsweise den von Personen mitgeführten Gepäckstücken, z.B. einem Flipchart, und der Vereinzelung von Personen in Personengruppen. Bekannte Systeme sind hier bezüglich einer spezifischen Unterscheidungsfähigkeit von Personen und anderen Objekten optimiert, jedoch nicht bezüglich einer besonderen Zuverlässigkeit im Sinne der funktionalen Sicherheit ertüchtigt. Demgegenüber ist das erfindungsgemäße Personenzählsystem bezüglich der funktionalen Sicherheit ertüchtigt und ermöglicht insbesondere aufgrund des Einsatzes der Bewegungsspurenbilder ein sicheres Erkennen von Personen.

Eine weitere Ausführungsform der Erfindung betrifft ein computerimplementiertes Verfahren zum Erkennen mindestens einer Person in Bilddaten. Das Verfahren umfasst folgende Schritte:
- Zuführen einer ersten Abfolge von Einzelbildern,
- Erzeugen eines ersten Bewegungsspurenbildes aus einer einstellbaren Anzahl an aufeinanderfolgenden Einzelbildern der ersten Abfolge,
- Auswerten des ersten Bewegungsspurenbildes, und
- Bereitstellen eines Ausgangssignals, welches zumindest in dem ersten Bewegungsspurenbild während der Auswertung erkannte Personen und/oder deren Anzahl angibt.

In dem Verfahren wird der zusätzliche Schritt des Erzeugens von Bewegungsspurenbildern und der anschließenden Auswertung derselben verwendet, um die Erkennung von Personen in Bilddaten zu verbessern, wodurch die mit dem Ausgangssignal bereitgestellten erkannten Personen beziehungsweise deren Anzahl den Anforderungen an die funktionale Sicherheit genügt.

In einer Ausgestaltung wird das computerimplementierte Verfahren in der oben beschriebenen erfindungsgemäßen Vorrichtung eingesetzt.

Im Übrigen gelten für das Verfahren die obigen Ausführungen zu der erfindungsgemäßen Vorrichtung entsprechend, insbesondere hinsichtlich Vorteilen und Ausführungsformen. Die genannten Ausführungsformen können untereinander kombiniert werden, sofern sich nicht explizit etwas anderes ergibt.

Die Erfindung wird nachfolgend beispielhaft anhand der Figuren näher erläutert. Funktions- bzw. wirkungsgleiche Bauelemente tragen gleiche Bezugszeichen. Es zeigen:

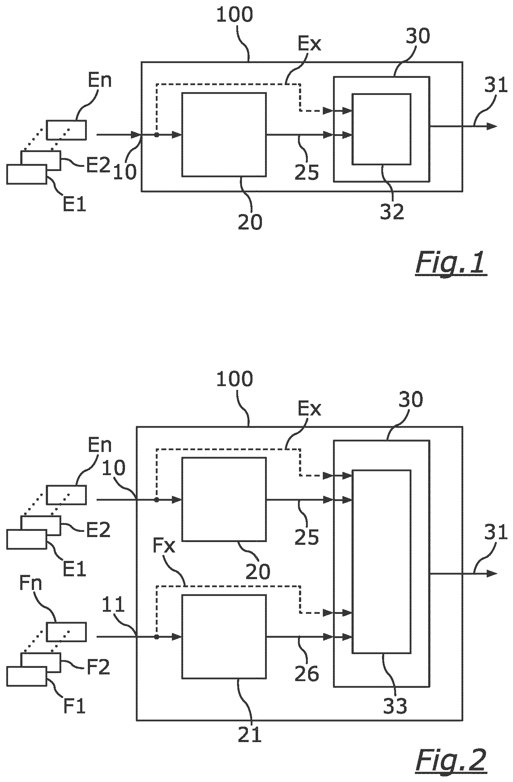

- Fig. 1: ein erstes Ausführungsbeispiel der Vorrichtung wie vorgeschlagen,
- Fig. 2: ein zweites Ausführungsbeispiel der Vorrichtung wie vorgeschlagen,

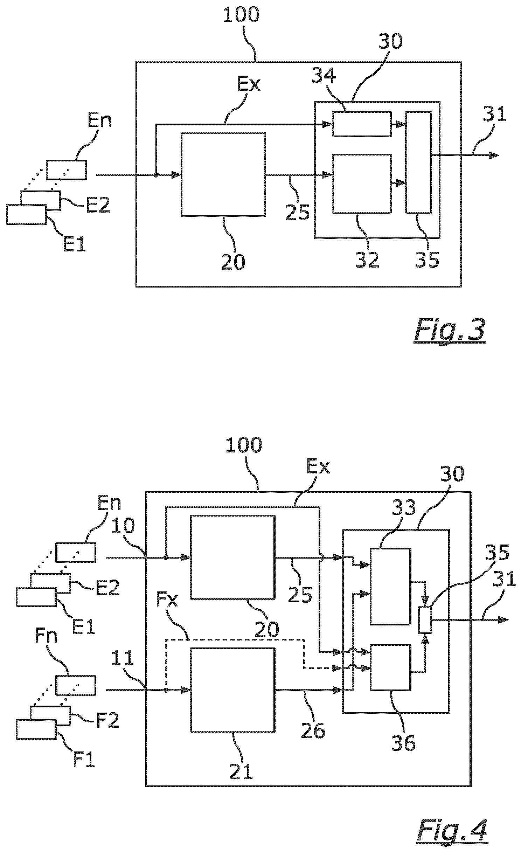

- Fig. 3: ein drittes Ausführungsbeispiel der Vorrichtung wie vorgeschlagen, und
- Fig. 4: ein viertes Ausführungsbeispiel der Vorrichtung wie vorgeschlagen.
- Fig. 5: ein beispielhaftes Einzelbild
- Fig. 6: ein beispielhaftes Bewegungsspurenbild,
- Fig. 7: ein weiteres beispielhaftes Bewegungsspurenbild, und
- Fig. 8: ein weiteres beispielhaftes Bewegungsspurenbild.

Fig. 1 zeigt eine erstes Ausführungsbeispiel einer Vorrichtung wie vorgeschlagen. Die Vorrichtung 100 zum Erkennen mindestens einer Person in Bilddaten hat einen Eingang 10 zum Zuführen einer ersten Abfolge von Einzelbildern E1, E2, ..., En. Diese Einzelbilder E1 bis En wurden beispielsweise von einer, hier nicht gezeigten, Kamera, insbesondere einer 2D- oder 3D-Kamera, erzeugt. Aus einer vorbestimmten Anzahl von Einzelbildern erzeugt die Vorverarbeitungseinheit 20 ein Bewegungsspurenbild 25. Dieses Bewegungsspurenbild 25 entspricht sozusagen einer Überlagerung dieser mehreren nacheinander aufgenommenen Einzelbilder.

Die Hauptverarbeitungseinheit 30 wertet das Bewegungsspurenbild 25 aus und ermittelt dadurch, ob das Bewegungsspurenbild 25 eine Person zeigt, bzw. wie viele Personen in dem Bewegungsspurenbild 25 abgebildet sind. Das Ausgangssignal 31 wird entsprechend bereitgestellt und gibt die in dem Bewegungsspurenbild 25 erkannten Personen beziehungsweise deren Anzahl an.

Die Überlagerung mehrerer Einzelbilder führt dazu, dass Unterscheidungsmerkmale von Personen und anderen Objekten, wie beispielsweise eine charakteristische Pendelbewegung einer Person beim Gehen, stärker herausgearbeitet werden und so eine Klassifizierung in der Hauptverarbeitungseinheit 30 mit höherer Güte erfolgt. Zudem führt diese Überlagerung zu einer gewissen Anonymisierung von Personen, die unter Umständen in den Einzelbildern noch deutlicher zu erkennen sind. Somit erfolgt die Verarbeitung der zugeführten Bilddaten unter Einhaltung der vorgegebenen Datenschutzrichtlinien.

In der Hauptverarbeitungseinheit 30 wird beispielsweise ein neuronales Netz 32 eingesetzt. Dieses wird vorab mit synthetischen oder realen Bewegungsspurenbildern 25 trainiert, so dass eine Auswertung zum richtigen Ergebnis führt. Während der Trainingsphase werden dem neuronalen Netz wie beschrieben durch Zufuhr der annotierten Trainingsbewegungsspurenbilder Beispiele von verschiedenen Klassen zur Verfügung gestellt. Merkmale, welche lediglich innerhalb der Struktur des neuronalen Netzes erkennbar sind und anhand welcher die Klassifizierung im laufenden Betrieb erfolgt, entwickelt das neuronale Netz in dieser Phase eigenständig.

Optional wird in der Hauptverarbeitungseinheit 30 zusätzlich ein Einzelbild Ex zur Auswertung herangezogen. Dieses Einzelbild Ex ist dabei eines der Einzelbilder, welche dem gerade in der Vorverarbeitungseinheit 20 erzeugten Bewegungsspurenbild 25 zugrunde liegen. Das Ausgangssignal 31 wird in dieser Ausführungsform aufgrund der Auswertung des Einzelbildes Ex und des Bewegungsspurenbildes 25 erzeugt. Sofern die Hauptverarbeitungseinheit 30 unter Verwendung eines einzigen neuronalen Netzes implementiert wird, wird das neuronale Netz 32 in diesem Fall vorab mit gelabelten Trainingsbewegungsspurenbildern 25 und gelabelten Trainingseinzelbildern Ex trainiert.

Fig. 2 zeigt ein weiteres Ausführungsbeispiel der Vorrichtung 100 wie vorgeschlagen. Dieses Beispiel stimmt mit dem Beispiel von Fig. 1 überein und hat zusätzlich einen zweiten Eingang 11, über den der Vorrichtung 100 eine zweite Abfolge von Einzelbildern F1, F2, ..., Fn zugeführt wird. Diese zweite Abfolge von Einzelbildern bzw. eine Anzahl dieser Einzelbilder wird in der zweiten Vorverarbeitungseinheit 21 benutzt, um daraus ein zweites Bewegungsspurenbild 26 zu erzeugen. Das zweite Bewegungsspurenbild 26 wird parallel zum ersten Bewegungsspurenbild 25 der Hauptverarbeitungseinheit 30 zugeführt. Diese wertet beide Bewegungsspurenbilder 25 und 26 aus und stellt so das Ausgangssignal 31, welches die Information darüber enthält, ob beziehungsweise wie viele Personen in den Bewegungsspurenbildern 25 und 26 detektiert wurden, bereit.

Die erste Folge von Einzelbildern E1 bis En enthält beispielsweise 2D-Bilder oder Grauwertbilder, während die zweite Abfolge von Einzelbildern F1 bis Fn 3D-Bilder bzw. Tiefenkarten enthält.

Sofern die Hauptverarbeitungseinheit 30 mit Hilfe eines neuronalen Netzes 33 realisiert ist, so wird das neuronale Netz 33 vorab mit gelabelten ersten Trainingsbewegungsspurenbildern 25 und gelabelten zweiten Trainingsbewegungsspurenbildern 26 trainiert.

In einer beispielhaften Implementierung wird das neuronale Netz 33 auf Basis eines YOLO-Netzes realisiert. Von den drei quasi identischen Eingangskanälen wird ein Kanal für die erste das Bewegungsspurenbild 25, ein zweiter Kanal für die das zweite Bewegungsspurenbild 26 und der dritte Kanal für die zweite Abfolge von Tiefenkarten-Einzelbildern F1 bis Fn verwendet. Das Netz 33 liefert beispielsweise Positionen, gekennzeichnet durch sogenannte Bounding Boxes, wo eine Person ermittelt wurde. Für das Bewegungsspurenbild wird beispielsweise ein Track ermittelt.

Dabei ist es lediglich von der Architektur des neuronalen Netzes abhängig, ob die 2D- und 3D-Bewegungsspurenbilder parallel oder separat ausgewertet werden. Bei einer separaten Auswertung werden zwei unabhängige Klassifikationsergebnisse für die beiden Bildkanäle ermittelt. Anschließend kann die abschließende Entscheidung, welche mit dem Ergebnissignal ausgegeben wird, auf unterschiedliche Weise erfolgen: In Fällen, in denen es besonders wichtig ist, keine Person zu übersehen, würde z.B. die Logik "wenn mindestens eine der beiden Entscheidungen eine Person als Ergebnis hatte, dann ist das Gesamtergebnis auch eine Person", im Sinne einer logischen ODER-Verknüpfung der Entscheidungen, verwendet werden.

Optional kann die Hauptverarbeitungseinheit 30 in ihre jeweilige Auswertung ein oder mehrere Einzelbilder Ex aus der ersten Abfolge von Einzelbildern, sowie alternativ oder zusätzlich ein oder mehrere Einzelbilder Fx aus der zweiten Abfolge von Einzelbildern miteinbeziehen. In diesem Fall wird das einzige neuronale Netz 33 vorab mit gelabelten ersten Trainingsbewegungsspurenbildern 25, gelabelten zweiten Trainingsbewegungsspurenbildern 26, gelabelten Trainingseinzelbildern Ex der ersten Abfolge und/oder gelabelten Trainingseinzelbildern Fx der zweiten Abfolge trainiert.

Fig. 3 zeigt ein drittes Ausführungsbeispiel der Vorrichtung 100. Dieses Ausführungsbeispiel stimmt mit dem Ausführungsbeispiel von Fig. 1 überein, mit dem Unterschied, dass zur Auswertung in der Hauptverarbeitungseinheit 30 zwei separate neuronale Netze 32 und 34, sowie eine Ausgabeeinheit 35 vorgesehen sind. Wie in Fig. 1 verarbeitet das neuronale Netz 32 das erste Bewegungsspurenbild 25 und erzeugt daraus ein erstes Auswerteergebnis für die Ausgabeeinheit 35. Die zusätzlich ausgewerteten Einzelbilder Ex werden in einem separaten neuronalen Netz 34 verarbeitet. Dieses erzeugt ein zweites Auswerteergebnis, welches ebenfalls der Ausgabeeinheit 35 zugeführt wird. Die Ausgabeeinheit 35 erzeugt aus beiden Auswerteergebnissen das Ausgangssignal 31. Beide neuronalen Netze 34 und 32 werden entsprechend vorab trainiert. Das heißt, das neuronale Netz 32 wird mit gelabelten ersten Trainingsbewegungsspurenbildern 25 trainiert, während das neuronale Netz 34 mit gelabelten Trainingseinzelbildern Ex vorab trainiert wird.

Diese Realisierung bietet mit Vorteil eine hohe Diversität sowohl durch die unterschiedlichen Bildmerkmale als auch durch die unterschiedlichen Trainingsprozesse, die gegebenenfalls zu unterschiedlichen Architekturen der beiden neuronalen Netze 32 und 34 führen. Eine Güte der Klassifikation wird dadurch noch weiter verbessert.

Fig. 4 zeigt ein viertes Ausführungsbeispiel der Vorrichtung 100 wie vorgeschlagen. Dieses Beispiel stimmt mit dem Ausführungsbeispiel von Fig. 2 überein, bis auf die Realisierung der Hauptverarbeitungseinheit 30. In Fig. 4 werden in der Hauptverarbeitungseinheit 30 zwei separate neuronale Netze 33 und 36 eingesetzt. In dem neuronalen Netz 33 werden das erste und das zweite Bewegungsspurenbild 25 und 26 ausgewertet. In dem neuronalen Netz 36 werden Einzelbilder Ex der ersten Abfolge und/oder Einzelbilder Fx der zweiten Abfolge verarbeitet. Ein jeweiliges Auswerteergebnis des neuronalen Netzes 33 und des neuronalen Netzes 36 wird der Ausgabeeinheit 35 zugeführt, welche daraus das Ausgangssignal 31 ermittelt. Auch in diesem Ausführungsbeispiel wird durch die Konzeptdiversität die Verlässlichkeit der Klassifikation noch weiter erhöht.

Fig. 5 zeigt ein beispielhaftes Einzelbild, welches ein Teil der ersten oder zweiten Abfolge von Einzelbildern sein kann. Gezeigt ist ein Bild eines Grauwertkanals einer Kamera. Erkennbar ist, dass die Identität der abgebildeten Person aufgrund des Bildes durchaus festgestellt werden kann.

Fig. 6 zeigt ein Beispiel für ein Bewegungsspurenbild, das aus 2D-Grauwerteinzelbildern berechnet wurde.

Fig. 7 zeigt ein weiteres beispielhaftes Bewegungsspurenbild, welches aus 3D-Einzelbildern akkumuliert wurde.

Fig. 8 zeigt ein weiteres Beispiel für ein Bewegungsspurenbild als 3D-Punktwolke. Es ist zu erkennen, dass die spezielle Form einer Person charakteristische Merkmale in der dargestellten Bewegungsspur hinterlässt. Diese unterscheidet sich deutlich von der Spur eines Fahrzeugs oder eines starren Objekts.

Durch Hinzufügen eines entsprechenden Labels kann jedes der Bilder der Figuren 6 bis 8 als Trainingsbewegungsspurenbild eingesetzt werden. Durch entsprechendes Annotieren des Einzelbildes aus Fig. 5 wird ein beispielhaftes Trainingseinzelbild.

### Bezugszeichenliste

- E1, E2, ..., En: Einzelbild
- F1, F2, ...., Fn: Einzelbild
- 10, 11: Eingang
- 20, 21: Vorverarbeitungseinheit
- 25, 26: Bewegungsspurenbild
- 30: Hauptverarbeitungseinheit
- 31: Ausgangssignal
- 32, 33, 34, 36: neuronales Netz
- 35: Ausgabeeinheit

## Patentansprüche

1. Vorrichtung (100) zum Erkennen mindestens einer Person in Bilddaten aufweisend
einen ersten Dateneingang (10) zum Zuführen einer ersten Abfolge von Einzelbildern (E1, ..., En),
eine erste Vorverarbeitungseinheit (20), die dazu eingerichtet ist, jeweils ein erstes Bewegungsspurenbild (25) aus einer ersten einstellbaren Anzahl an aufeinanderfolgenden Einzelbildern der ersten Abfolge zu erzeugen,
eine Hauptverarbeitungseinheit (30), die dazu eingerichtet ist, das erste Bewegungsspurenbild (25) auszuwerten und daraus ein Ausgangssignal (31) bereitzustellen, welches zumindest in dem ersten Bewegungsspurenbild während der Auswertung erkannte Personen und/oder deren Anzahl angibt.

2. Vorrichtung (100) nach Anspruch 1,
wobei die Hauptverarbeitungseinheit (30) ein künstliches neuronales Netz (32), insbesondere ein klassifizierendes neuronales Netz, umfasst.

3. Vorrichtung (100) nach dem vorstehenden Anspruch,
wobei das neuronale Netz (32) in einer Trainingsphase unter Verwendung einer Vielzahl annotierter erster Trainingsbewegungsspurenbilder trainiert wurde.

4. Vorrichtung (100) nach Anspruch 1,
weiter aufweisend
einen zweiten Dateneingang (11) zum Zuführen einer zweiten Abfolge von Einzelbildern,
eine zweite Vorverarbeitungseinheit, die dazu eingerichtet ist, jeweils ein zweites Bewegungsspurenbild (26) aus einer zweiten einstellbaren Anzahl an aufeinanderfolgenden Einzelbildern (F1, ..., Fn) der zweiten Abfolge zu erzeugen, insbesondere wobei die zweite einstellbare Anzahl an aufeinanderfolgenden Einzelbildern an die erste einstellbare Anzahl an aufeinanderfolgenden Einzelbildern angepasst ist und ein Startzeitpunkt der zweiten Abfolge von Einzelbildern an einen Startzeitpunkt der ersten Abfolge von Einzelbildern angepasst ist,
wobei die Hauptverarbeitungseinheit (30) weiter dazu eingerichtet ist, das erste und das zweite Bewegungsspurenbild (25, 26) auszuwerten und daraus das Ausgangssignal (31) bereitzustellen.

5. Vorrichtung (100) nach dem vorstehenden Anspruch,
wobei die erste Abfolge von Einzelbildern zweidimensionale Einzelbilder, insbesondere Grauwertbilder, umfasst, und
wobei die zweite Abfolge von Einzelbildern dreidimensionale Einzelbilder, insbesondere Tiefenkarten, umfasst.

6. Vorrichtung (100) nach Anspruch 4 oder 5,
wobei die Hauptverarbeitungseinheit (30) ein künstliches neuronales Netz (33), insbesondere ein klassifizierendes neuronales Netz, umfasst.

7. Vorrichtung (100) nach dem vorstehenden Anspruch,
wobei das neuronale Netz (33) in einer Trainingsphase unter Verwendung einer Vielzahl annotierter erster Trainingsbewegungsspurenbilder und einer Vielzahl annotierter zweiter Trainingsbewegungsspurenbilder trainiert wurde

8. Vorrichtung (100) nach einem der vorstehenden Ansprüche,
wobei das erste bzw. das zweite Bewegungsspurenbild (25, 26) eine Überlagerung der Einzelbilder aus der einstellbaren Anzahl an aufeinanderfolgenden Einzelbildern der ersten bzw. zweiten Abfolge von Einzelbildern ist.

9. Vorrichtung (100) nach Anspruch 1,
wobei die Hauptverarbeitungseinheit (30) weiter dazu eingerichtet ist, zusätzlich zu dem ersten Bewegungsspurenbild (25) mindestens ein Einzelbild (Ex) aus der ersten Abfolge von Einzelbildern auszuwerten und daraus das Ausgangssignal (31) bereitzustellen,
wobei die erste Abfolge von Einzelbildern dreidimensionale Einzelbilder, insbesondere Tiefenkarten, umfasst.

10. Vorrichtung (100) nach Anspruch 3,
wobei die Hauptverarbeitungseinheit (30) ein weiteres künstliches neuronales Netz (34), insbesondere ein weiteres klassifizierendes neuronales Netz, und eine Ausgabeeinheit (35) umfasst, wobei das weitere neuronale Netz (34) in einer Trainingsphase unter Verwendung einer Vielzahl annotierter erster Trainingseinzelbilder darauf trainiert wurde, mindestens ein Einzelbild (Ex) aus der ersten Abfolge von Einzelbildern auszuwerten, und wobei die Ausgabeeinheit (35) dazu eingerichtet ist, das Ausgangssignal (31) in Abhängigkeit eines Auswerteergebnisses des neuronalen Netzes (32) und eines Auswerteergebnisses des weiteren neuronalen Netzes (34) bereitzustellen,
oder
wobei das neuronale Netz (32) der Hauptverarbeitungseinheit (30) während der Trainingsphase zusätzlich unter Verwendung einer Vielzahl annotierter erster Trainingseinzelbilder trainiert wurde, mindestens ein Einzelbild (Ex) aus der ersten Abfolge von Einzelbildern auszuwerten.

11. Vorrichtung (100) nach Anspruch 7,
wobei die Hauptverarbeitungseinheit (30) ein weiteres künstliches neuronales Netz (36), insbesondere ein weiteres klassifizierendes neuronales Netz, und eine Ausgabeeinheit (35) umfasst, wobei das weitere neuronale Netz (36) in einer Trainingsphase unter Verwendung einer Vielzahl annotierter erster Trainingseinzelbilder und/oder einer Vielzahl annotierter zweiter Trainingseinzelbilder trainiert wurde mindestens ein Einzelbild (Ex) aus der ersten Abfolge von Einzelbildern und/oder mindestens ein Einzelbild (Fx) aus der zweiten Abfolge von Einzelbildern auszuwerten, und wobei die Ausgabeeinheit (35) dazu eingerichtet ist, das Ausgangssignal (31) in Abhängigkeit eines Auswerteergebnisses des neuronalen Netzes (33) und eines Auswerteergebnisses des weiteren neuronalen Netzes (36) bereitzustellen, oder
wobei das neuronale Netz (33) der Hauptverarbeitungseinheit während der Trainingsphase zusätzlich unter Verwendung einer Vielzahl annotierter erster Trainingseinzelbilder und/oder einer Vielzahl annotierter zweiter Trainingseinzelbilder trainiert wurde mindestens ein Einzelbild (Ex) aus der ersten Abfolge von Einzelbildern und/oder mindestens ein Einzelbild (Fx) aus der zweiten Abfolge von Einzelbildern auszuwerten.

12. Vorrichtung (100) nach einem der Ansprüche 3 bis 11,
wobei die in der jeweiligen Trainingsphase eingesetzten ersten und/oder zweiten Trainingsbewegungsspurenbilder verschiedene Klassen von Objekten aufweisen und gemäß dieser Klassen annotiert sind,
wobei die verschiedenen Klassen zumindest eine Menschenklasse, eine Fahrzeugklasse und eine humanoide Roboterklasse umfassen, wobei die jeweilige Trainingsphase gemäß eines überwachten Lernens erfolgt.

13. Vorrichtung (100) nach dem vorstehenden Anspruch,
wobei ein Trainingsbewegungsspurenbild der Menschenklasse mindestens ein für eine Person charakteristisches Bewegungsmerkmal umfasst, beispielsweise eine zeitliche Pendel- und/oder Wippbewegung einer in Fortbewegung befindlichen Person, eine Bewegung mindestens einer Extremität einer in Fortbewegung befindlichen Person, eine plastische Verformung des Körpers einer in Fortbewegung befindlichen Person.

14. Personenzählsystem aufweisend
eine Vorrichtung (100) zum Erkennen mindestens einer Person in Bilddaten nach einem der vorstehenden Ansprüche, und
eine Kamera zur Erzeugung der Einzelbilder, wobei ein Datenausgang der Kamera mit dem Dateneingang (10) der Vorrichtung verbunden ist, wobei das Personenzählsystem dazu eingerichtet ist, in Abhängigkeit des Ausgangssignals (31) der Vorrichtung (100) eine Anzahl von Passagen von Personen über eine Grenze funktional sicher zu erfassen.

15. Computerimplementiertes Verfahren zum Erkennen mindestens einer Person in Bilddaten aufweisend
Zuführen einer ersten Abfolge von Einzelbildern (E1, ..., En),
Erzeugen eines ersten Bewegungsspurenbildes (25) aus einer ersten einstellbaren Anzahl an aufeinanderfolgenden Einzelbildern der ersten Abfolge,
Auswerten des ersten Bewegungsspurenbildes (25) und
Bereitstellen eines Ausgangssignals (31), welches zumindest in dem ersten Bewegungsspurenbild (25) während der Auswertung erkannte Personen und/oder deren Anzahl angibt.

## Geänderte Patentansprüche

### Geänderte Patentansprüche gemäss Regel 137(2) EPÜ.

**1.** Vorrichtung (100) zum Erkennen mindestens einer Person in Bilddaten aufweisend
einen ersten Dateneingang (10) zum Zuführen einer ersten Abfolge von Einzelbildern (E1, ..., En),
eine erste Vorverarbeitungseinheit (20), die dazu eingerichtet ist, jeweils ein erstes Bewegungsspurenbild (25) aus einer ersten einstellbaren Anzahl an aufeinanderfolgenden Einzelbildern der ersten Abfolge zu erzeugen,
eine Hauptverarbeitungseinheit (30), die dazu eingerichtet ist, das erste Bewegungsspurenbild (25) auszuwerten und daraus ein Ausgangssignal (31) bereitzustellen, welches zumindest in dem ersten Bewegungsspurenbild während der Auswertung erkannte Personen und/oder deren Anzahl angibt, wobei die Hauptverarbeitungseinheit (30) weiter dazu eingerichtet ist, zusätzlich zu dem ersten Bewegungsspurenbild (25) mindestens ein Einzelbild (Ex) aus der ersten Abfolge von Einzelbildern auszuwerten und daraus das Ausgangssignal (31) bereitzustellen,
wobei die erste Abfolge von Einzelbildern (E1, ..., En) dreidimensionale Einzelbilder, insbesondere Tiefenkarten, umfasst.

**2.** Vorrichtung (100) nach Anspruch 1,
wobei die Hauptverarbeitungseinheit (30) ein künstliches neuronales Netz (32), insbesondere ein klassifizierendes neuronales Netz, umfasst.

**3.** Vorrichtung (100) nach dem vorstehenden Anspruch,
wobei das neuronale Netz (32) in einer Trainingsphase unter Verwendung einer Vielzahl annotierter erster Trainingsbewegungsspurenbilder trainiert wurde.

**4.** Vorrichtung (100) nach Anspruch 1,
weiter aufweisend
einen zweiten Dateneingang (11) zum Zuführen einer zweiten Abfolge von Einzelbildern,
eine zweite Vorverarbeitungseinheit, die dazu eingerichtet ist, jeweils ein zweites Bewegungsspurenbild (26) aus einer zweiten einstellbaren Anzahl an aufeinanderfolgenden Einzelbildern (F1, ..., Fn) der zweiten Abfolge zu erzeugen, insbesondere wobei die zweite einstellbare Anzahl an aufeinanderfolgenden Einzelbildern an die erste einstellbare Anzahl an aufeinanderfolgenden Einzelbildern angepasst ist und ein Startzeitpunkt der zweiten Abfolge von Einzelbildern an einen Startzeitpunkt der ersten Abfolge von Einzelbildern angepasst ist,
wobei die Hauptverarbeitungseinheit (30) weiter dazu eingerichtet ist, das erste und das zweite Bewegungsspurenbild (25, 26) auszuwerten und daraus das Ausgangssignal (31) bereitzustellen.

**5.** Vorrichtung (100) nach dem vorstehenden Anspruch,
wobei die erste Abfolge von Einzelbildern zweidimensionale Einzelbilder, insbesondere Grauwertbilder, umfasst, und
wobei die zweite Abfolge von Einzelbildern dreidimensionale Einzelbilder, insbesondere Tiefenkarten, umfasst.

**6.** Vorrichtung (100) nach Anspruch 4 oder 5,
wobei die Hauptverarbeitungseinheit (30) ein künstliches neuronales Netz (33), insbesondere ein klassifizierendes neuronales Netz, umfasst.

**7.** Vorrichtung (100) nach dem vorstehenden Anspruch,
wobei das neuronale Netz (33) in einer Trainingsphase unter Verwendung einer Vielzahl annotierter erster Trainingsbewegungsspurenbilder und einer Vielzahl annotierter zweiter Trainingsbewegungsspurenbilder trainiert wurde

**8.** Vorrichtung (100) nach einem der vorstehenden Ansprüche,
wobei das erste bzw. das zweite Bewegungsspurenbild (25, 26) eine Überlagerung der Einzelbilder aus der einstellbaren Anzahl an aufeinanderfolgenden Einzelbildern der ersten bzw. zweiten Abfolge von Einzelbildern ist.

**9.** Vorrichtung (100) nach Anspruch 3,
wobei die Hauptverarbeitungseinheit (30) ein weiteres künstliches neuronales Netz (34), insbesondere ein weiteres klassifizierendes neuronales Netz, und eine Ausgabeeinheit (35) umfasst, wobei das weitere neuronale Netz (34) in einer Trainingsphase unter Verwendung einer Vielzahl annotierter erster Trainingseinzelbilder darauf trainiert wurde, mindestens ein Einzelbild (Ex) aus der ersten Abfolge von Einzelbildern auszuwerten, und wobei die Ausgabeeinheit (35) dazu eingerichtet ist, das Ausgangssignal (31) in Abhängigkeit eines Auswerteergebnisses des neuronalen Netzes (32) und eines Auswerteergebnisses des weiteren neuronalen Netzes (34) bereitzustellen,
oder
wobei das neuronale Netz (32) der Hauptverarbeitungseinheit (30) während der Trainingsphase zusätzlich unter Verwendung einer Vielzahl annotierter erster Trainingseinzelbilder trainiert wurde, mindestens ein Einzelbild (Ex) aus der ersten Abfolge von Einzelbildern auszuwerten.

**10.** Vorrichtung (100) nach Anspruch 7,
wobei die Hauptverarbeitungseinheit (30) ein weiteres künstliches neuronales Netz (36), insbesondere ein weiteres klassifizierendes neuronales Netz, und eine Ausgabeeinheit (35) umfasst, wobei das weitere neuronale Netz (36) in einer Trainingsphase unter Verwendung einer Vielzahl annotierter erster Trainingseinzelbilder und/oder einer Vielzahl annotierter zweiter Trainingseinzelbilder trainiert wurde mindestens ein Einzelbild (Ex) aus der ersten Abfolge von Einzelbildern und/oder mindestens ein Einzelbild (Fx) aus der zweiten Abfolge von Einzelbildern auszuwerten, und wobei die Ausgabeeinheit (35) dazu eingerichtet ist, das Ausgangssignal (31) in Abhängigkeit eines Auswerteergebnisses des neuronalen Netzes (33) und eines Auswerteergebnisses des weiteren neuronalen Netzes (36) bereitzustellen, oder
wobei das neuronale Netz (33) der Hauptverarbeitungseinheit während der Trainingsphase zusätzlich unter Verwendung einer Vielzahl annotierter erster Trainingseinzelbilder und/oder einer Vielzahl annotierter zweiter Trainingseinzelbilder trainiert wurde mindestens ein Einzelbild (Ex) aus der ersten Abfolge von Einzelbildern und/oder mindestens ein Einzelbild (Fx) aus der zweiten Abfolge von Einzelbildern auszuwerten.

**11.** Vorrichtung (100) nach einem der Ansprüche 3 bis 10,
wobei die in der jeweiligen Trainingsphase eingesetzten ersten und/oder zweiten Trainingsbewegungsspurenbilder verschiedene Klassen von Objekten aufweisen und gemäß dieser Klassen annotiert sind,
wobei die verschiedenen Klassen zumindest eine Menschenklasse, eine Fahrzeugklasse und eine humanoide Roboterklasse umfassen, wobei die jeweilige Trainingsphase gemäß eines überwachten Lernens erfolgt.

**12.** Vorrichtung (100) nach dem vorstehenden Anspruch,
wobei ein Trainingsbewegungsspurenbild der Menschenklasse mindestens ein für eine Person charakteristisches Bewegungsmerkmal umfasst, beispielsweise eine zeitliche Pendel- und/oder Wippbewegung einer in Fortbewegung befindlichen Person, eine Bewegung mindestens einer Extremität einer in Fortbewegung befindlichen Person, eine plastische Verformung des Körpers einer in Fortbewegung befindlichen Person.

**13.** Personenzählsystem aufweisend
eine Vorrichtung (100) zum Erkennen mindestens einer Person in Bilddaten nach einem der vorstehenden Ansprüche, und
eine Kamera zur Erzeugung der Einzelbilder, wobei ein Datenausgang der Kamera mit dem Dateneingang (10) der Vorrichtung verbunden ist, wobei das Personenzählsystem dazu eingerichtet ist, in Abhängigkeit des Ausgangssignals (31) der Vorrichtung (100) eine Anzahl von Passagen von Personen über eine Grenze funktional sicher zu erfassen.

**14.** Computerimplementiertes Verfahren zum Erkennen mindestens einer Person in Bilddaten aufweisend
Zuführen einer ersten Abfolge von Einzelbildern (E1, ..., En), wobei die erste Abfolge von Einzelbildern (E1, ..., En) dreidimensionale Einzelbilder, insbesondere Tiefenkarten, umfasst,
Erzeugen eines ersten Bewegungsspurenbildes (25) aus einer ersten einstellbaren Anzahl an aufeinanderfolgenden Einzelbildern der ersten Abfolge,
Auswerten des ersten Bewegungsspurenbildes (25) und mindestens eines Einzelbildes (Ex) aus der ersten Abfolge von Einzelbildern, und Bereitstellen eines Ausgangssignals (31), welches zumindest in dem ersten Bewegungsspurenbild (25) während der Auswertung erkannte Personen und/oder deren Anzahl angibt.

**1.** Vorrichtung (100) zum funktional sicheren Erkennen mindestens einer Person in Bilddaten aufweisend
einen ersten Dateneingang (10) zum Zuführen einer ersten Abfolge von Einzelbildern (E1, ..., En),
eine erste Vorverarbeitungseinheit (20), die dazu eingerichtet ist, jeweils ein erstes Bewegungsspurenbild (25) aus einer ersten einstellbaren Anzahl an aufeinanderfolgenden Einzelbildern der ersten Abfolge zu erzeugen,
eine Hauptverarbeitungseinheit (30), die dazu eingerichtet ist, das erste Bewegungsspurenbild (25) auszuwerten und daraus ein Ausgangssignal (31) bereitzustellen, welches zumindest in dem ersten Bewegungsspurenbild während der Auswertung erkannte Personen und/oder deren Anzahl angibt, wobei die Hauptverarbeitungseinheit (30) weiter dazu eingerichtet ist, zusätzlich zu dem ersten Bewegungsspurenbild (25) mindestens ein Einzelbild (Ex) aus der ersten Abfolge von Einzelbildern auszuwerten und daraus das Ausgangssignal (31) bereitzustellen,
wobei die erste Abfolge von Einzelbildern (E1, ..., En) dreidimensionale Einzelbilder, insbesondere Tiefenkarten, umfasst.

**2.** Vorrichtung (100) nach Anspruch 1,
wobei die Hauptverarbeitungseinheit (30) ein künstliches neuronales Netz (32), insbesondere ein klassifizierendes neuronales Netz, umfasst.

**3.** Vorrichtung (100) nach dem vorstehenden Anspruch,
wobei das neuronale Netz (32) in einer Trainingsphase unter Verwendung einer Vielzahl annotierter erster Trainingsbewegungsspurenbilder trainiert wurde.

**4.** Vorrichtung (100) nach Anspruch 1,
weiter aufweisend
einen zweiten Dateneingang (11) zum Zuführen einer zweiten Abfolge von Einzelbildern,
eine zweite Vorverarbeitungseinheit, die dazu eingerichtet ist, jeweils ein zweites Bewegungsspurenbild (26) aus einer zweiten einstellbaren Anzahl an aufeinanderfolgenden Einzelbildern (F1, ..., Fn) der zweiten Abfolge zu erzeugen, insbesondere wobei die zweite einstellbare Anzahl an aufeinanderfolgenden Einzelbildern an die erste einstellbare Anzahl an aufeinanderfolgenden Einzelbildern angepasst ist und ein Startzeitpunkt der zweiten Abfolge von Einzelbildern an einen Startzeitpunkt der ersten Abfolge von Einzelbildern angepasst ist,
wobei die Hauptverarbeitungseinheit (30) weiter dazu eingerichtet ist, das erste und das zweite Bewegungsspurenbild (25, 26) auszuwerten und daraus das Ausgangssignal (31) bereitzustellen.

**5.** Vorrichtung (100) nach dem vorstehenden Anspruch,
wobei die erste Abfolge von Einzelbildern zweidimensionale Einzelbilder, insbesondere Grauwertbilder, umfasst, und
wobei die zweite Abfolge von Einzelbildern dreidimensionale Einzelbilder, insbesondere Tiefenkarten, umfasst.

**6.** Vorrichtung (100) nach Anspruch 4 oder 5,
wobei die Hauptverarbeitungseinheit (30) ein künstliches neuronales Netz (33), insbesondere ein klassifizierendes neuronales Netz, umfasst.

**7.** Vorrichtung (100) nach dem vorstehenden Anspruch,
wobei das neuronale Netz (33) in einer Trainingsphase unter Verwendung einer Vielzahl annotierter erster Trainingsbewegungsspurenbilder und einer Vielzahl annotierter zweiter Trainingsbewegungsspurenbilder trainiert wurde

**8.** Vorrichtung (100) nach einem der vorstehenden Ansprüche,
wobei das erste bzw. das zweite Bewegungsspurenbild (25, 26) eine Überlagerung der Einzelbilder aus der einstellbaren Anzahl an aufeinanderfolgenden Einzelbildern der ersten bzw. zweiten Abfolge von Einzelbildern ist.

**9.** Vorrichtung (100) nach Anspruch 3,
wobei die Hauptverarbeitungseinheit (30) ein weiteres künstliches neuronales Netz (34), insbesondere ein weiteres klassifizierendes neuronales Netz, und eine Ausgabeeinheit (35) umfasst, wobei das weitere neuronale Netz (34) in einer Trainingsphase unter Verwendung einer Vielzahl annotierter erster Trainingseinzelbilder darauf trainiert wurde, mindestens ein Einzelbild (Ex) aus der ersten Abfolge von Einzelbildern auszuwerten, und wobei die Ausgabeeinheit (35) dazu eingerichtet ist, das Ausgangssignal (31) in Abhängigkeit eines Auswerteergebnisses des neuronalen Netzes (32) und eines Auswerteergebnisses des weiteren neuronalen Netzes (34) bereitzustellen,
oder
wobei das neuronale Netz (32) der Hauptverarbeitungseinheit (30) während der Trainingsphase zusätzlich unter Verwendung einer Vielzahl annotierter erster Trainingseinzelbilder trainiert wurde, mindestens ein Einzelbild (Ex) aus der ersten Abfolge von Einzelbildern auszuwerten.

**10.** Vorrichtung (100) nach Anspruch 7,
wobei die Hauptverarbeitungseinheit (30) ein weiteres künstliches neuronales Netz (36), insbesondere ein weiteres klassifizierendes neuronales Netz, und eine Ausgabeeinheit (35) umfasst, wobei das weitere neuronale Netz (36) in einer Trainingsphase unter Verwendung einer Vielzahl annotierter erster Trainingseinzelbilder und/oder einer Vielzahl annotierter zweiter Trainingseinzelbilder trainiert wurde mindestens ein Einzelbild (Ex) aus der ersten Abfolge von Einzelbildern und/oder mindestens ein Einzelbild (Fx) aus der zweiten Abfolge von Einzelbildern auszuwerten, und wobei die Ausgabeeinheit (35) dazu eingerichtet ist, das Ausgangssignal (31) in Abhängigkeit eines Auswerteergebnisses des neuronalen Netzes (33) und eines Auswerteergebnisses des weiteren neuronalen Netzes (36) bereitzustellen, oder
wobei das neuronale Netz (33) der Hauptverarbeitungseinheit während der Trainingsphase zusätzlich unter Verwendung einer Vielzahl annotierter erster Trainingseinzelbilder und/oder einer Vielzahl annotierter zweiter Trainingseinzelbilder trainiert wurde mindestens ein Einzelbild (Ex) aus der ersten Abfolge von Einzelbildern und/oder mindestens ein Einzelbild (Fx) aus der zweiten Abfolge von Einzelbildern auszuwerten.

**11.** Vorrichtung (100) nach einem der Ansprüche 3 bis 10,
wobei die in der jeweiligen Trainingsphase eingesetzten ersten und/oder zweiten Trainingsbewegungsspurenbilder verschiedene Klassen von Objekten aufweisen und gemäß dieser Klassen annotiert sind,
wobei die verschiedenen Klassen zumindest eine Menschenklasse, eine Fahrzeugklasse und eine humanoide Roboterklasse umfassen, wobei die jeweilige Trainingsphase gemäß eines überwachten Lernens erfolgt.

**12.** Vorrichtung (100) nach dem vorstehenden Anspruch,
wobei ein Trainingsbewegungsspurenbild der Menschenklasse mindestens ein für eine Person charakteristisches Bewegungsmerkmal umfasst, beispielsweise eine zeitliche Pendel- und/oder Wippbewegung einer in Fortbewegung befindlichen Person, eine Bewegung mindestens einer Extremität einer in Fortbewegung befindlichen Person, eine plastische Verformung des Körpers einer in Fortbewegung befindlichen Person.

**13.** Personenzählsystem aufweisend
eine Vorrichtung (100) zum funktional sicheren Erkennen mindestens einer Person in Bilddaten nach einem der vorstehenden Ansprüche, und eine Kamera zur Erzeugung der Einzelbilder, wobei ein Datenausgang der Kamera mit dem Dateneingang (10) der Vorrichtung verbunden ist, wobei das Personenzählsystem dazu eingerichtet ist, in Abhängigkeit des Ausgangssignals (31) der Vorrichtung (100) eine Anzahl von Passagen von Personen über eine Grenze funktional sicher zu erfassen.

**14.** Computerimplementiertes Verfahren zum funktional sicheren Erkennen mindestens einer Person in Bilddaten aufweisend
Zuführen einer ersten Abfolge von Einzelbildern (E1, ..., En), wobei die erste Abfolge von Einzelbildern (E1, ..., En) dreidimensionale Einzelbilder, insbesondere Tiefenkarten, umfasst,
Erzeugen eines ersten Bewegungsspurenbildes (25) aus einer ersten einstellbaren Anzahl an aufeinanderfolgenden Einzelbildern der ersten Abfolge,
Auswerten des ersten Bewegungsspurenbildes (25) und mindestens eines Einzelbildes (Ex) aus der ersten Abfolge von Einzelbildern, und Bereitstellen eines Ausgangssignals (31), welches zumindest in dem ersten Bewegungsspurenbild (25) während der Auswertung erkannte Personen und/oder deren Anzahl angibt.
